# EUROPÄISCHE PATENTSCHRIFT

(11) **EP 1 683 601 B1**
(45) Veröffentlichungstag und Bekanntmachung des Hinweises auf die Patenterteilung: **23.04.2008**
(21) Anmeldenummer: 05405035.6
(22) Anmeldetag: 25.01.2005
(51) Int. Cl.: B23K 26/08, B23K 26/38, B23K 37/04, B23Q 7/14

(54) **Verfahren zum Laserschneiden von Rohblechen und Laserschneidemaschine zur Durchführung des Verfahrens**
Process for laser cutting of sheets and laser cutting device for carrying out the process
Méthode de découpage laser de tôles brutes et dispositif de découpe laser pour mettre en oeuvre ce procédé

(43) Veröffentlichungstag der Anmeldung: 26.07.2006
(73) Patentinhaber: Bystronic Laser AG, CH-3362 Niederönz (CH)
(72) Erfinder: Plüss, Thomas, 4923 Wynau BE (CH)
(74) Vertreter: EGLI-EUROPEAN PATENT ATTORNEYS

(56) Entgegenhaltungen:
- DE-A1- 3 712 682
- DE-A1- 3 826 530
- DE-A1- 4 128 194
- US-A- 5 373 136
- US-A- 6 046 428
- PATENT ABSTRACTS OF JAPAN Bd. 1997, Nr. 04, 30. April 1997 (1997-04-30) -& JP 08 332565 A (KOMATSU SANKI KK), 17. Dezember 1996 (1996-12-17)

## Beschreibung

Die Erfindung betrifft ein Verfahren zum Laserschneiden von Rohblechen gemäss dem Oberbegriff des Patentanspruchs 1 sowie eine Laserschneidemaschine gemäss dem Oberbegriff des Patentanspruchs 5 zur Durchführung des Verfahrens (siehe, z.B., US-A-5 373 136).

Die Erfindung betrifft insbesondere ein Verfahren zum Laserschneiden von Rohblechen mit einer Laserschneidemaschine, die einen in einer horizontalen Ebene bewegbaren Laserschneidekopf aufweist und bei der die Rohbleche in einer Vorschubrichtung V stückweise zur Bearbeitung in eine definierte Position in einen Schneidebereich der Laserschneidemaschine eingeschoben werden. Unter stückweiser Bearbeitung ist dabei ein Vorgang zu verstehen, bei dem eine grosse, rechteckige Metallplatte, hier auch Rohblech genannt, stückweise immer weiter in den Schneidebereich einer Laserschneidemaschine eingeschoben wird, um dort in einer Anzahl von Bearbeitungsschritten bearbeitet zu werden.

Zwar gibt es heute im Industriebereich Laserschneidemaschinen, mit denen grosse Rohbleche der genannten Art in einem einzigen Durchgang bearbeitet werden können. Diese Maschinen beanspruchen deshalb aber auch sehr viel Platz, weil nebst dem eigentlichen Bearbeitungsbereich auch der Belade- und der Entladebereich sehr viel Raum einnehmen. Zudem müssen alle Teile in der Regel für relativ grosse Lasten ausgelegt sein. Genau arbeitende Maschinen dieser Grösse sind deshalb in der Regel sehr teuer und haben, wie erwähnt, einen enormen Platzbedarf.

Es besteht deshalb auch ein Bedarf, kleinere und vor allem auch platzsparendere Laserschneidemaschinen für die Bearbeitung von metallischem Plattenmaterial (sheet metal oder metal plates) anbieten zu können.

Aus dem Bereich der Laser-Bearbeitung eher dünnerer Blechmaterialien sind Lösungen bekannt, bei denen das Ausgangsmaterial in Rollenform vorliegt. Eine derartige Lösung ist beispielsweise aus der US-6 515 256 bekannt. Dabei wird ein Metallstreifen in eine Laserbearbeitungsmaschine geführt und es werden mittels Laserbearbeitung eine Vielzahl von Teilen aus dem Metallstreifen hergestellt. Schliesslich werden die hergestellten Teile vom Reststreifen getrennt. Eine ähnliche Lösung zeigt auch die US-6 183 064. Das Rollenmaterial ist hier ein Composite-Streifen und die hergestellten Teile werden mittels eines Lasers ,vereinzelt'. Zwar wird auch bei diesen Lösungen das Ausgangsmaterial stückweise immer weiter in den Schneidebereich einer Laserschneidemaschine eingeschoben, allerdings scheinen die Verfahren nur für Rollenmaterial, nicht aber für wenig oder nicht biegsame Metallplatten geeignet zu sein.

Eine weitere Lösung dieser Kategorie zeigt auch die US-4 782 208. Sie zeigt ein Verfahren und eine Vorrichtung zum Aufschneiden von Streifen. Auch hier liegt das Ausgangsmaterial als Metallstreifen in Rollenform vor. Die aus dem Metallstreifen mittels Laserschneiden herausgeschnittenen Teilstreifen werden ebenfalls wieder aufgerollt. Die Schnittlinien zum Herausschneiden der Teilstreifen verlaufen zwar im wesentlichen parallel zur Vorschubrichtung, die einzelnen herausgeschnittenen Teilstreifen weisen aber in einer Richtung quer zur Vorschubrichtung Überlappungen auf. Dies dient dem Zweck, das Ausgangsmaterial möglichst gut auszunützen und eine möglichst grosse Zahl von gleichartigen Teilen herauszuschneiden.

Im Bereich des Laserschneidens von nicht-rollenförmigem Ausgangsmaterial offenbart die JP-05-318156 (von Amada) ein Verfahren zur Bearbeitung von Metallplatten sowie eine Laser/Stanz Verbundmaschine. Hinsichtlich der Reihenfolge der Bearbeitungsschritte ist dieser Offenbarung zu entnehmen, dass mittels Laserschneiden geschnittene Teile nach der Laserbearbeitung mittels eines Stanzwerkzeuges von der Metallplatte getrennt werden.

Die JP-2000-061752 (von Amada) zeigt ebenfalls ein Verfahren zur Bearbeitung von Platten sowie eine Plattenbearbeitungsmaschine. Bezüglich der Bearbeitungs-Reihenfolge wird hier offenbar zuerst ein Teil eines Ausgangs-Plattenmateriales geholt, wobei es zunächst in hoher Präzision vom Rest des Ausgangs-Plattenmaterial getrennt wird.

Schliesslich zeigen weitere Publikationen im Internet, dass es Hersteller von Laserschneideanlagen gibt, die Geräte anbieten, deren Platzbedarf bzw. deren Aufstellfläche an spezielle Bedürfnisse angepasst ist.

So zeigt beispielsweise die Firma Trumpf (siehe www.trumpf.com) eine 2D-Laserschneideanlage mit der Bezeichnung TRUMATIC L 2510 für automatisiertes Laserschneiden, die wenig Aufstellfläche benötigt. Die TRUMATIC L 2510 verwendet ein lineares Durchlaufkonzept, indem eine Beladeeinrichtung, eine Bearbeitungsstation und eine Entladeeinrichtung in linearer Weise angeordnet sind. Bei dieser Maschine wird die Entladeeinrichtung nach der Teilebearbeitung in den Arbeitsbereich der Maschine gefahren und entnimmt die gefertigten Teile samt Restgitter mit einem Entladerechen aus dem Arbeitsbereich. Gleichzeitig kann die Maschine aus dem Beladebereich mit dem nächsten Rohblech beladen werden.

Ein ähnliches, wenngleich auch etwas unterschiedlich realisiertes Bearbeitungskonzept zeigt ein Laser Bearbeitungszentrum (Laser processing center) der Firma Axel (www.lvdgroup.com). Auch hier soll dank kompaktem Design nur eine minimale Aufstellfläche notwendig sein. Im Gegensatz zur vorher beschriebenen Maschine von Trumpf erfolgt hier die Beladung der Maschine vorwärts aus einer Beladerichtung, während die Entladung der Maschine rückwärts, aber in der gleichen Richtung, erfolgt.

Keine dieser beiden Maschinen und auch keine der vorstehend genannten Publikationen zu Verfahren zur Laserbearbeitung von Metallplatten zeigen jedoch ein Bearbeitungsverfahren für grosse, längliche Rohbleche, bei dem das Rohblech stückweise immer weiter zur Bearbeitung in eine definierte Position in einen Schneidebereich der Laserschneidemaschine eingeschoben wird. Grundsätzlich eröffnet eine durchlaufartige Bearbeitungsweise aber auch bei der Bearbeitung von Metallplatten die Möglichkeit, kleinere Laserbearbeitungsmaschinen zu verwenden, weil die Grösse des Schneide- bzw. Bearbeitungsbettes nicht mehr der vollen Grösse des Ausgangsmateriales entsprechen muss.

Aufgabe der vorliegenden Erfindung ist es, ein Verfahren zum Laserschneiden von Rohblechen sowie eine Laserschneidemaschine zur Durchführung des Verfahrens anzugeben, bei dem ein Rohblech stückweise immer weiter zur Bearbeitung in eine definierte Position in einen Schneidebereich der Laserschneidemaschine eingeschoben wird, und bei dem die einzelnen Verfahrensschritte mit grosser Flexibilität durchführbar sind, um eine optimale Ausnutzung des Rohbleches zu erreichen.

Diese Aufgabe wird durch die Merkmale der Patentansprüche 1 und 5 gelöst.

Die Lösung dieser Aufgabe geht davon aus, dass ein Rohblech pro Arbeitsschritt in einem bearbeitbaren Bereich, der in der Ausdehnung dem Schneidebereich der Laserschneidemaschine entspricht, im ganzen bearbeitbaren Bereich oder nur in einem Teil desselben mittels Laserschneiden bearbeitet wird, dass eine Vielzahl aneinandergereihter derartiger Arbeitsschritte möglich sind und dass bei jedem neuen bzw. sich wiederholenden Bearbeitungsschritt die Resultate des vorhergehenden Bearbeitungsschrittes mitberücksichtigt werden oder mitberücksichtigbar sind.

Geht man von dieser Prämisse aus, so wird es möglich, trotz durchlaufartiger Bearbeitungsweise die Materialausnutzung des Rohbleches optimal zu gestalten. Zumeist ist eine Optimierung dabei vor allem hinsichtlich einer maximalen Flächenausnutzung (maximale Anzahl der aus einem Rohblech herstellbaren Teile) erwünscht. Optimierungen dieser Art sind aber meist nur dann möglich, wenn Überlappungen in alle Richtungen in der Anordnung der einzelnen Teile, zulässig sind. Genau dies wird aber durch die Möglichkeit, dass ein Rohblech pro Arbeitsschritt nur in einem Bereich, der in der Ausdehnung lediglich einem Teil des Schneidebereichs der Laserschneidemaschine entspricht, bearbeitet wird, in vielen Fällen signifikant verbessert (so beispielsweise etwa bei annähernd L-förmigen Teilen, deren Hauptausdehnungen ungefähr die Grösse des Schneidebereiches der Laserschneidemaschine erreichen). Beim erfindungsgemässen Verfahren können sich Überlappungen ohne weiteres sogar in beliebige Richtungen, also sowohl längs wie auch quer zur Vorschubrichtung des Rohbleches erstrecken.

Um im Falle derartige Überlappungen zwischen einem bereits bearbeiteten Teil eines Rohbleches und einem noch nicht bearbeiteten Teil des Rohbleches eine problemlose Trennung (nach der Bearbeitung) erreichen zu können, ist der Schneidetisch, auf dem die gefertigten Teile und das Restgitter aufliegen, in der Höhe verstellbar angeordnet. Vorzugsweise erfolgt diese Höhenverstellung in einer Weise, dass neben einer eigentlichen Arbeitshöhe (Schneidetisch in einer Bearbeitungsstellung) noch eine erste, unter der Arbeitshöhe liegende Ebene (zur Übergabe der gefertigten Teile und des Restgitters an eine Entladegabel) und eine zweite, noch weiter unter der Arbeitshöhe liegende Ebene vorhanden ist. Die erwähnte Trennung erfolgt dann durch Absenken des Schneidetisches auf die erste Ebene, die eigentliche Übergabe der gefertigten Teile und des Restgitters an eine Entladegabel durch weitere Absenkung des Schneidetisches auf die zweite Ebene.

Schliesslich wird durch die prinzipielle Anordnung des Materialflusses (Entnahmerichtung vorzugsweise senkrecht zur Vorschubrichtung) erreicht, dass der Entnahmebereich unmittelbar neben dem Schneidbereich und damit auch sehr gut zugänglich und einsehbar für den Maschinenoperateur angeordnet ist. Ausserdem kann, wie aus den Zeichnungen des Ausführungsbeispiels ersichtlich, die Laserbearbeitungsmaschine auf diese Weise ebenfalls sehr kompakt und raumsparend gebaut werden.

Im folgenden wird das erfindungsgemässe Verfahren anhand von Prinzipzeichnungen näher erläutert.

In den Zeichnungen zeigen:
- Fig. 1: Eine Draufsicht auf ein Rohblech nach dessen Platzierung im Schneidebereich einer Laserschneidemaschine,
- Fig. 2a: Eine Prinzipdarstellung eines Bearbeitungsschrittes, der nicht im Gegenstand der Erfindung steht, bei dem ein Rohblech im ganzen bearbeitbaren Teil bearbeitet wird,
- Fig. 2b: Eine Prinzipdarstellung eines Bearbeitungsschrittes, bei dem ein Rohblech nur in einem Teil des bearbeitbaren Bereiches bearbeitet wird,
- Fig. 3: Eine Draufsicht auf gefertigte Teile und ein Restgitter nach einem Bearbeitungsschritt gemäss Fig. 2b,
- Fig. 4: Eine Draufsicht auf ein Rohblech nach einem ersten Bearbeitungsschritt gemäss Fig. 2b und nach dessen erneuter Platzierung im Schneidebereich der Laserschneidemaschine für einen weiteren Bearbeitungsschritt,
- Fig. 5: Drei Ansichten einer erfindungsgemässen Laserschneidemaschine, und
- Fig. 6: Eine schematische Darstellung des erfindungsgemässen Entnahmevorganges der gefertigten Teile und des Restgitters aus der Laserschneidemaschine.

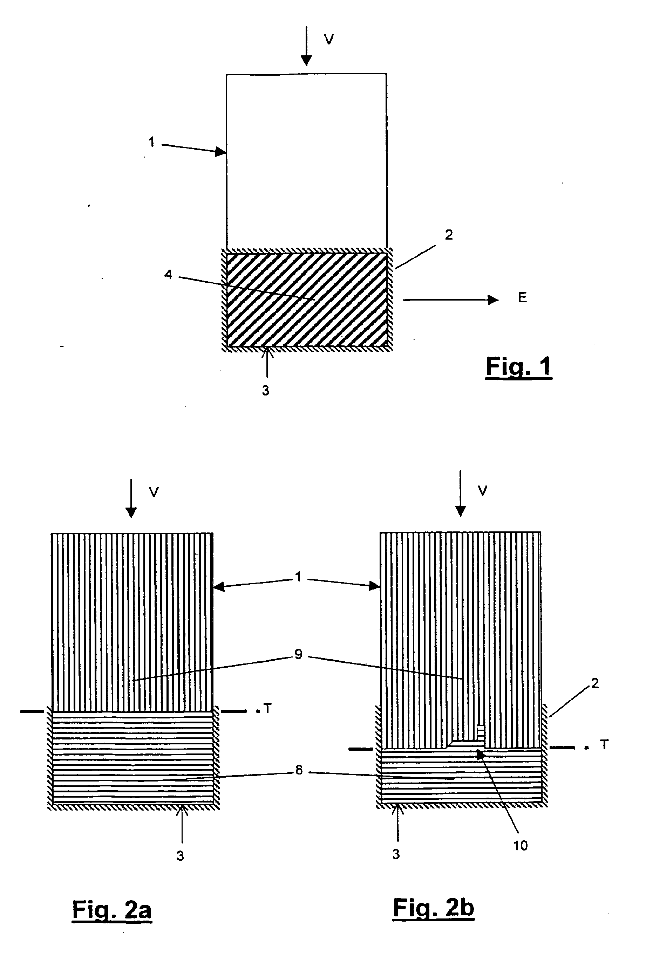

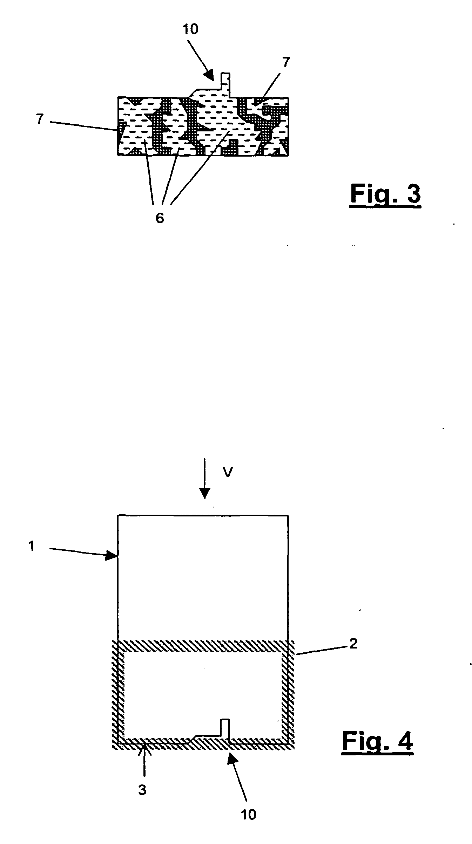

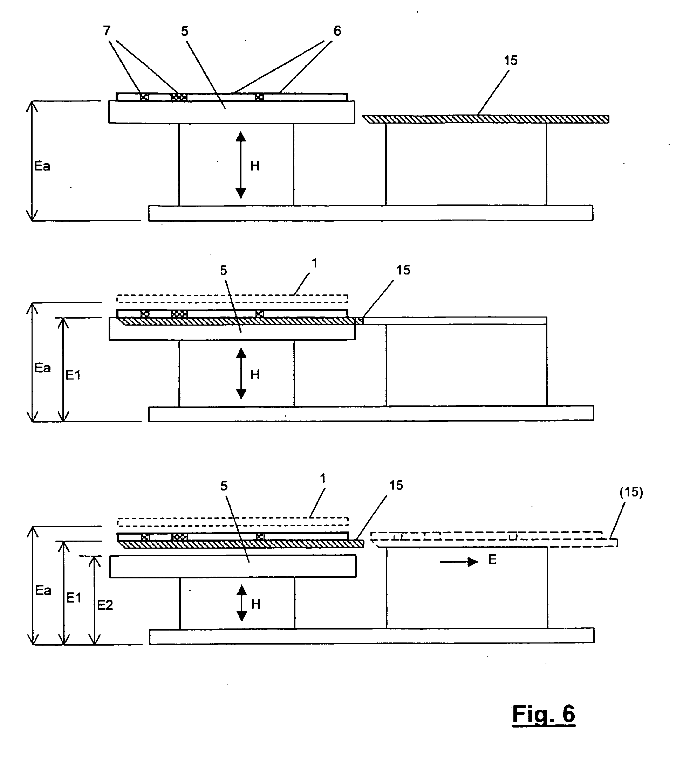

Die Fig. 1 zeigt eine Draufsicht auf ein Rohblech 1 nach dessen Platzierung in einem Schneidebereich 2 einer Laserschneidemaschine. Diese Platzierung ist natürlich stets eine definierte Position im Arbeitsraum der Laserschneidemaschine, in dieser Figur vereinfacht dargestellt, indem eine Vorderkante 3 des Rohblechs 1 beispielsweise am vorderen Rand des Schneidebereiches 2 ausgerichtet ist. Ein bearbeitbarer Bereich 4 des Rohbleches entspricht in seiner Ausdehnung dem Schneidebereich 2 der Laserschneidemaschine. Zur Platzierung im Schneidebereich 2 wird das Rohblech 1 in einer Vorschubrichtung V in den Schneidebereich 2 der Laserschneidemaschine eingeschoben. Das Rohblech 1 liegt dann im Schneidebereich 2 der Laserschneidemaschine auf einem Schneidetisch 5, der als Hubtisch ausgebildet ist, auf (siehe dazu auch Fig. 6). Nach der erfolgten Laserbearbeitung werden die gefertigten Teile 6 sowie das Restgitter 7 (siehe dazu auch Fig. 3) in einer horizontalen Entnahmerichtung E, die vorteilhaft rechtwinklig zur Vorschubrichtung V angeordnet ist, dem Arbeitsraum der Laserschneidemaschine entnommen.

Das Rohblech 1 kann nun in einem Bearbeitungsschritt entweder im ganzen bearbeitbaren Bereich 4 oder nur in einem Teil desselben bearbeitet werden. Zur Verdeutlichung ist der jeweils bearbeitete Teil 8 des Rohbleches mit einer horizontalen Schraffur und der jeweils nicht-bearbeitete Teil 9 des Rohbleches mit einer vertikalen Schraffur versehen.

Die Fig. 2a zeigt eine Prinzipdarstellung eines Bearbeitungsschrittes, der nicht im Gegenstand der Erfindung steht, bei dem ein Rohblech 1 im ganzen bearbeitbaren Teil 4 bearbeitet wird.

Die Fig. 2b zeigt eine Prinzipdarstellung eines Bearbeitungsschrittes gemäß der Erfindung, bei dem ein Rohblech nur in einem Teil des bearbeitbaren Bereiches 4 bearbeitet wird. In diesem Fall bestehen zwischen dem bearbeiteten Teil 8 des Rohbleches 1 und dem nicht-bearbeiteten Teil 9 des Rohbleches 1 auch ein oder mehrere Überlappungsbereiche 10. In dieser schematischen Darstellung erstreckt sich der Überlappungsbereich 10 in eine Richtung parallel zur Vorschubrichtung V, es können aber auch Überlappungen quer zur Vorschubrichtung V vorhanden sein.

Pro Bearbeitungsschritt wird in beiden Fällen im bearbeiteten Teil 8 des Rohbleches 1 eine Anzahl von Teilen mittels Laserschneiden herausgeschnitten. Die Form und die (optimierte) Anordnung der Teilekonturen bestimmen, ob ein Überlappungsbereiche 10 notwendig oder sinnvoll ist. Üblicherweise werden derartige Optimierungen ohnehin von dem Fachmann bekannter und gängiger Software durchgeführt. In beiden Fällen wird aber letztlich der bearbeitete Teil 8 des Rohbleches 1 vom nicht-bearbeiteten Teil 9 des Rohbleches 1 entlang einer Trennlinie T getrennt. Dabei kann es Teil des angewendeten Optimierungsprozesses sein, zu welchem Zeitpunkt der Laserbearbeitung Teile der Trennlinie T oder Teile der Konturen der zu fertigenden Teile geschnitten werden. Insbesondere bei Fertigungsprozessen gemäss der Fig. 2b ist es ohne weiteres möglich, dass im Überlappungsbereich 10 Teile der Trennlinie T mit Teilen der Konturen der zu fertigenden Teile zusammenfallen und deshalb zuerst geschnitten werden.

Die Fig. 3 zeigt eine Draufsicht auf gefertigte Teile 6 und das Restgitter 7 nach einem ersten Bearbeitungsschritt gemäss Fig. 2b. Das Beispiel ist rein schematisch und kann in Wirklichkeit natürlich sehr viel komplexere Formen annehmen. Jedenfalls aber werden nach erfolgter Laserbearbeitung die gefertigten Teile 6 stets zusammen mit dem Restgitter 7 aus dem Schneidebereich 2 der Laserschneidemaschine entfernt.

Die Fig. 4 zeigt eine Draufsicht auf ein übrigbleibendes Rohblech nach einem ersten Bearbeitungsschritt gemäss Fig. 2b und nach erneuter Platzierung des übrigbleibenden Rohbleches 1 im Schneidebereich 2 der Laserschneidemaschine für einen weiteren Bearbeitungsschritt. Auch hier erfolgt nach dem weiteren Einschieben des Rohbleches bzw. des übrigbleibenden Rohbleches zunächst wieder die Ausrichtung auf eine definierte Position im Arbeitsraum der Laserschneidemaschine, abermals vereinfacht dargestellt durch die wiederum am vorderen Rand des Schneidebereiches 2 ausgerichtete Vorderkante 3 des Rohblechs 1. Selbstverständlich müssen bei diesem Bearbeitungsschritt die Resultate des vorhergehenden Bearbeitungsschrittes berücksichtigt werden, da in den Überlappungsbereichen das Material fehlt und die Teilekonturen unter Berücksichtigung dieses Sachverhaltes angeordnet werden müssen.

Insgesamt ermöglicht aber die Möglichkeit von Teilbearbeitungen des bearbeitbaren Bereichs 4 eines Rohbleches 1, dass die einzelnen Verfahrensschritte mit grosser Flexibilität durchführbar sind und eine optimale Ausnutzung des Rohbleches auch in der ganzen ursprünglichen Ausdehnung desselben erreicht werden kann. So kann der Optimierungsvorgang anhand der vorgegebenen zu fertigenden Teile durch eine Optimierungssoftware bereits vor Beginn des ersten Bearbeitungsschrittes für die ganze ursprüngliche Ausdehnung des Rohbleches errechnet und die Zahl der optimal erforderlichen Trennschnitte entlang von Trennlinien T vorausbestimmt werden.

Eine Eigenheit des erfindungsgemässen Verfahrens besteht somit auch darin, dass die Materialausnutzung des in jedem weiteren Bearbeitungsschritt bearbeiteten Teils des Rohblechs in einer Weise erfolgt, dass an einer Vorderkante eines übrigbleibenden nicht-bearbeiteten Teil des Rohbleches eine teilweise rechtwinklig zur Vorschubrichtung V verlaufende Trennlinie geschnitten wird, die vorzugsweise keine darüber hinaus in Vorschubrichtung V vorstehenden Teile aufweist. Damit wird bei jedem Bearbeitungsvorgang wieder eine genaue Ausrichtung der Vorderkante 3 des Rohbleches ermöglicht.

Die Flexibilität des erfindungsgemässen Verfahrens beruht im wesentlichen darauf, dass Überlappungsbereiche 10 existieren.

Um derartige Überlappungsbereiche 10 zwischen einem bereits bearbeiteten Teil 8 eines Rohbleches 1 und einem noch nicht bearbeiteten 9 Teil des Rohbleches 1 eine problemlose Trennung (nach der Bearbeitung) erreichen zu können, ist der Schneidetisch 5, auf dem die gefertigten Teile 6 und das Restgitter 7 aufliegen, in der Höhe H verstellbar angeordnet (für eine Beschreibung der Entnahme der gefertigten Teile 6 und des Restgitters siehe Fig. 6 und Beschreibung dazu).

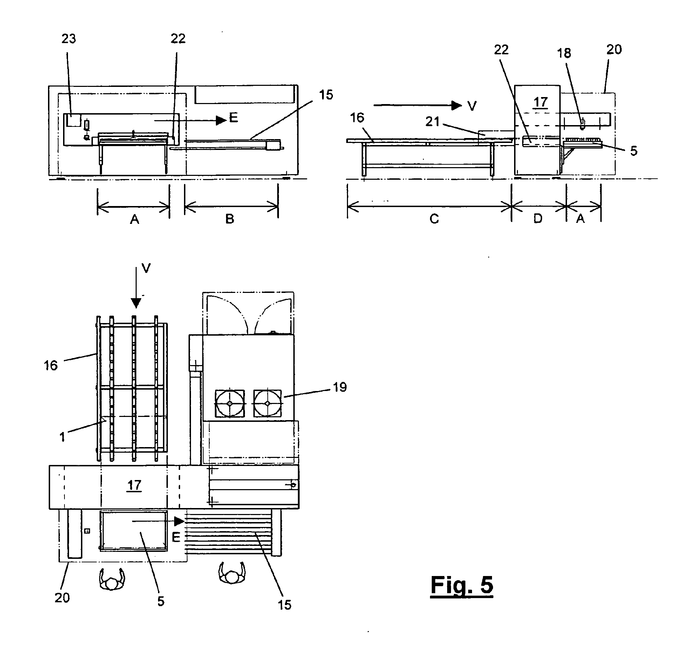

Die Fig. 5 zeigt drei Ansichten einer möglichen Konfiguration einer erfindungsgemässen Laserschneidemaschine zur Durchführung des erfindungsgemässen Verfahrens. Eine Ansicht von oben zeigt die Anordnung des als Hubtisch ausgebildeten Schneidetisches 5 sowie einer Entladegabel 15 einer Entnahmevorrichtung. Die Beschickung mit Rohblechen 1 erfolgt über einen Auflagetisch 16 in der Vorschubrichtung V. Neben und über dem Schneidetisch 5 befindet sich eine Steuerungseinrichtung 17 mit einem Laserschneidekopf 18. Der Laserschneidekopf 18 bewegt sich dabei auf einen Führungswagen in einer horizontalen Ebene über dem Schneidetisch 5. Neben dem Auflagetisch befindet sich ein Kombigerät 19 für die Absaugung und Kühlung. Lediglich angedeutet sind vorhandene Schutzeinrichtungen 20 und 21. Die zwei Seitenansichten zeigen zusätzlich noch die Anordnung einer Blechvorschub- und Klemmeinrichtung 22 sowie einer Führungseinheit 23.

Es kann somit zum besseren Verständnis auch unterschieden werden in einen Schneidebereich A, eine Parkposition für ein Gabelsystem B, einen Beschickungsbereich C und eine Parkposition für den (Rohblech-)Tafelvorschub D.

Die Fig. 6 zeigt schliesslich noch eine schematische Darstellung des erfindungsgemässen Entnahmevorganges der gefertigten Teile 6 und des Restgitters 7 aus der Laserschneidemaschine.

Zunächst, d.h. während und unmittelbar nach der Bearbeitung eines Rohbleches 1 in einem ersten Bearbeitungsschritt befindet sich der Schneidetisch 5 in einer Arbeitshöhe Ea. Die gefertigten Teile 6 und das Restgitter 7 liegen noch auf dem Schneidetisch 5 auf, sie sind jedoch bereits vom restlichen Teil des Rohbleches 1 mittels des früher erwähnten Trennschnittes entlang einer Trennlinie T getrennt.

Dann wird der Schneidetisch 5 mit den noch immer darauf aufliegenden gefertigten Teilen 6 sowie dem Restgitter 7 auf die Höhe einer ersten Ebene E1 abgesenkt. Dies bewirkt die Separierung der gefertigten Teile 6 und des Restgitters 7 vom übrigbleibenden Teil des Rohbleches 1 im Falle von Überlappungen in Überlappungsbereichen 10. Jetzt wird die Entladegabel 15 in den Schneidetisch 5 und unter die gefertigten Teile 6 und das Restgitter 7 eingefahren. Selbstverständlich müssen der Schneidetisch 5 und die Entladegabel 15 entsprechend ausgebildet sein, d.h. die ineinandergreifenden Teile müssen 'feinmaschig' genug ausgebildet sein, damit auch die kleinsten gefertigten Teile 6 noch sicher aufliegen. Entsprechende und gängige Konstruktionen sind dem Fachmann jedoch bekannt.

Dann wird der Schneidetisch 5 auf die Höhe der zweiten Ebene E2 abgesenkt. Dies bewirkt, dass die gefertigten Teile 6 und das Restgitter 7 nunmehr nicht mehr auf dem Schneidetisch 5 sondern auf der Entladegabel 15 aufliegen. Die Entladegabel 15 mit den gefertigten Teilen 6 und dem Restgitter 7 kann nun in Entnahmerichtung E ausgefahren werden.

Selbstverständlich muss nach dem erneuten Einziehen des Rohbleches 1 mittels der Blechvorschubeinrichtung 22 für einen weiteren Bearbeitungsschritt der Schneidetisch 5 wieder auf die Arbeitshöhe Ea angehoben werden, damit der bearbeitbare Bereich 4 des Rohbleches 1 auf dem Schneidetisch 5 aufliegt und somit auch nur bereits teilweise bearbeitete Teile richtig gestützt werden.

### Bezugsziffernliste:

- 1: Rohblech
- 2: Schneidebereich der Laserschneidemaschine
- 3: Vorderkante des Rohblechs
- 4: bearbeitbarer Bereich des Rohblechs
- 5: Schneidetisch
- 6: gefertigte Teile
- 7: Restgitter
- 8: bearbeiteter Teil des Rohblechs
- 9: nicht-bearbeiteter Teil des Rohblechs
- 10: Überlappungsbereich
- 11-14: (nicht verwendet)
- 15: Entladegabel
- 16: Auflagetisch (im Beschickungsbereich)
- 17: Steuerungseinrichtung
- 18: Laserschneidekopf
- 19: Kombigerät
- 20: Schutzeinrichtung
- 21: Schutzeinrichtung
- 22: Blechvorschub- und Klemmeinrichtung
- 23: Führungseinheit

- V: Vorschubrichtung
- E: Entnahmerichtung
- H: Höhe
- T: Trennlinie
- Ea: Arbeitshöhe
- E1: erste Ebene
- E2: zweite Ebene
- A: Schneidbereich
- B: Parkposition Gabelsystem
- C: Beschickungsbereich
- D: Parkposition Tafelvorschub

## Patentansprüche

1. Verfahren zum Laserschneiden von Rohblechen (1) mit einer Laserschneidemaschine, wobei die Laserschneidemaschine einen in einer horizontalen Ebene bewegbaren Laserschneidekopf (18) aufweist und wobei die Rohbleche (1) in einer Vorschubrichtung V stückweise zur Bearbeitung in eine definierte Position in einen Schneidebereich (2) der Laserschneidemaschine eingeschoben werden, **dadurch gekennzeichnet, dass** in einem ersten Bearbeitungsschritt
- das Rohblech (1) in einem bearbeitbaren Bereich (4), der in der Ausdehnung dem Schneidebereich (2) entspricht, in einem Teil des ganzen bearbeitbaren Bereich mittels Laserschneiden bearbeitet wird,
- mittels Laserschneiden gefertigte Teile (6) und ein Restgitter (7) ebenfalls mittels Laserschneiden vom Rohblech (1) abgetrennt werden,
- die mittels Laserschneiden gefertigten Teile (6) zusammen mit dem Restgitter (7) anschliessend mittels einer automatischen Entnahmevorrichtung aus dem Schneidebereich (2) der Laserschneidemaschine entfernt werden,
und wobei in einem oder mehreren weiteren Bearbeitungsschritten das Verfahren nach der Entnahme der gefertigten Teile (6) mit dem Restgitter (7) aus dem Schneidebereich (2) der Laserschneidemaschine in gleicher Weise wiederholbar ist, bis das Rohblech (1) vollständig verarbeitet ist, wobei bei jedem sich wiederholenden Bearbeitungsschritt die Resultate des vorhergehenden Bearbeitungsschrittes mitberücksichtigt werden, wobei die Materialausnutzung des in jedem weiteren Bearbeitungsschritt bearbeiteten Teils (8) des Rohblechs (1) in einer Weise erfolgt, dass an einer Vorderkante (3) eines übrigbleibenden nicht-bearbeiteten Teils (9) des Rohbleches (1) eine teilweise rechtwinklig zur Vorschubrichtung V verlaufende Trennlinie T geschnitten wird, die keine darüber hinaus in Vorschubrichtung V vorstehenden Teile aufweist, und zwischen dem bearbeiteten Teil (8) des Rohbleches (1) und dem nicht-bearbeiteten Teil (9) des Rohbleches (1) ein Überlappungsbereich (10) besteht, wobei der Überlappungsbereich (10) sich in einer Richtung parallel und/oder quer zur Vorschubrichtung V erstrecken kann.

2. Verfahren nach Patentanspruch 1, **dadurch gekennzeichnet, dass** das Rohblech (1) und der in jedem Bearbeitungsschritt bearbeitete Teil (8) des Rohblechs (1) in einer Weise bearbeitet wird, dass die Materialausnutzung des Rohbleches (1) möglichst optimal erfolgt.

3. Verfahren nach einem der Patentansprüche 1 oder 2, wobei nach der Fertigung von Teilen mittels Laserschneiden und nach der Trennung des bearbeiteten Teils (8) des Rohbleches (1) vom nicht-bearbeiteten Teil (9) des Rohbleches (1)
- ein Schneidetisch (5), auf dem die gefertigten Teile (6) und das Restgitter (7) aufliegen, abgesenkt wird, um in jedem Fall, sicher aber im Fall eines vorhandenen Überlappungsbereiches (10), den bearbeiteten Teil (8) des Rohbleches (1) vom nicht-bearbeiteten Teil (9) des Rohbleches (1) zu separieren,
- eine Entnahmegabel (15) in den Schneidetisch (5) und unter die auf dem Schneidetisch (5) aufliegenden gefertigten Teile (6) und das Restgitter (7) eingefahren wird,
- der Schneidetisch (5), auf dem die gefertigten Teile (6) und das Restgitter (7) aufliegen, abgesenkt wird, wodurch die gefertigten Teile (6) und das Restgitter (7) auf die Entnahmegabel (15) zu liegen kommen, und
- die Entnahmegabel (15) mit den nunmehr auf der Entnahmegabel (15) aufliegenden gefertigten Teilen (6) und dem Restgitter (7) mittels der automatischen Entnahmevorrichtung in der Entnahmerichtung E aus dem Schneidebereich (2) der Laserschneidemaschine herausbewegt werden

4. Verfahren nach einem der Patentansprüche 1 bis 3, **dadurch gekennzeichnet, dass** die Entnahme der gefertigten Teile (6) und des Restgitters (7) in einer horizontalen Entnahmerichtung E erfolgt, die rechtwinklig zur Vorschubrichtung V angeordnet ist.

5. Laserschneidemaschine zur Durchführung des Verfahrens nach Patentanspruch 1 mit
- einen in einer horizontalen Ebene über dem Schneidetisch (5) in einem Schneidebereich (2) bewegbaren Laserschneidekopf (18),
- eine Blechvorschiebeeinrichtung (22) zum Vorschieben eines zu bearbeitenden Rohbleches (1) in einer Vorschubrichtung V von einem Auflagetisch (16) in den Schneidebereich (2) der Laserschneidemaschine sowie zur Positionierung des Rohbleches (1) im Schneidebereich (2) der Laserschneidemaschine, **dadurch gekennzeichnet, dass** die Laserschneidemaschine folgende Komponenten aufweist
- einen in der Höhe H bewegbaren Schneidetisch (5),
- eine in den Schneidetisch (5) ein- und ausfahrbare Entladegabel (15) einer automatischen Entnahmevorrichtung,
- eine Steuerungseinrichtung (17) zur Steuerung der Bearbeitungsvorgänge der Laserschneidemaschine gemäß den im Anspruch 1 definierten Schritten sowie der Belade- und Entnahmevorgänge in Abhängigkeit von mit der Laserschneidemaschine durchgeführten Bearbeitungsvorgängen am Rohblech (1) gemäß den im Anspruch 1 definierten Schritten.

6. Laserschneidemaschine nach Patentanspruch 5, **dadurch gekennzeichnet, dass** der in der Höhe bewegbare Schneidetisch (5) aus einer Arbeitshöhe Ea in eine darunterliegende erste Ebene E1, oder in eine erste Ebene E1 und eine noch weiter darunterliegende zweite Ebene E2 bewegbar ist.

7. Laserschneidemaschine nach Patentanspruch 6, **dadurch gekennzeichnet, dass** eine Übergabe von auf dem Schneidetisch (5) aufliegenden gefertigten Teilen (6) und dem Restgitter (7) mittels der automatischen Entnahmevorrichtung und mittels der in den Schneidetisch ein- und ausfahrbaren Entladegabel (15) in der Arbeitsshöhe Ea oder auf der Höhe der ersten Ebene E1 durchführbar ist.

8. Laserschneidemaschine nach Patentanspruch 7, **dadurch gekennzeichnet, dass** die Auswahl, ob eine Übergabe in der Arbeitsshöhe Ea oder in der Höhe der ersten Ebene E1 durchgeführt wird, automatisch und in Abhängigkeit vom Vorhandensein eines Überlappungsbereiches 10 zwischen dem bearbeiteten und dem nicht-bearbeiteten Teil (8, 9) des Rohbleches (1) erfolgt.

9. Laserschneidemaschine nach einem der Patentansprüche 5 bis 8, **dadurch gekennzeichnet, dass** die Entladegabel (15) in einer rechtwinklig zur Vorschubrichtung V angeordneten Entnahmerichtung E in den Schneidetisch (5) ein- und ausfahrbar ist.

## Claims

1. A method for laser-cutting sheet metal blanks (1) with a laser-cutting machine, wherein the laser-cutting machine has a laser-cutting head (18), which can be moved in a horizontal plane, and wherein the sheet metal blanks (1) are pushed piece by piece in a defined position in a feed direction V into a cutting zone (2) of the laser-cutting machine in order to be machined, **characterised in that**, in a first machining step,
- the sheet metal blank (1) is machined by laser cutting in a machineable zone (4) whose extent corresponds to the cutting zone (2), in a part of the entire machineable zone,
- parts (6) produced by laser cutting and waste material (7) are also separated from the sheet metal blank (1) by means of laser cutting,
- the parts (6) produced by laser cutting together with the waste material (7) are then removed from the cutting zone (2) of the laser-cutting machine by means of an automatic removal device,
and wherein in one or a plurality of machining steps, the method can be repeated in the same manner after the removal of the produced parts (6) with the waste material (7) from the cutting zone (2) of the laser-cutting machine until the sheet metal blank (1) is completely machined, wherein in each repeating machining step the results of the previous machining step are taken into account, wherein the material of the part (8) of the sheet metal blank (1) machined in each further machining step is utilised in a manner whereby a separating line T is cut at a front edge (3) of a leftover non-machined part (9) of the sheet metal blank (1), which separating line runs partially perpendicularly to the feed direction V and does not have any parts projecting beyond it in the feed direction V, and an overlapping zone (10) exists between the machined part (8) of the sheet metal blank (1) and the non-machined part (9) of the sheet metal blank (1), wherein the overlapping zone (10) can extend in a direction parallel and/or transverse to the feed direction V.

2. The method according to Patent Claim 1, **characterised in that** the sheet metal blank (1) and the part (8) of the sheet metal blank (1) which is machined in each machining step is machined in a manner in which the material of the sheet metal blank (1) is utilised as optimally as possible.

3. The method according to one of Patent Claims 1 or 2, wherein, after parts have been produced by laser cutting and after the machined part (8) of the sheet metal blank (1) has been separated from the non-machined part (9) of the sheet metal blank (1)
- a cutting table (5), on which the produced parts (6) and the waste material (7) lie, is lowered in order to separate the machined part (8) of the sheet metal blank (1) from the non-machined part (9) of the sheet metal blank (1) in any case but definitely in the case of an overlapping zone (10) being present,
- a removal fork (15) is inserted into the cutting table (5) and under the produced parts (6) and waste material (7) lying on the cutting table (5),
- the cutting table (5), on which the produced parts (6) and waste material (7) are lying, is lowered, as a result of which the produced parts (6) and the waste material (7) come to rest on the removal fork (15), and
- the removal fork (15) with the produced parts (6) and waste material (7) now lying on the removal fork (15) are moved in the removal direction E out of the cutting zone (2) of the laser-cutting machine by means of the automatic removal device.

4. The method according to one of Patent Claims 1 to 3, **characterised in that** the produced parts (6) and the waste material (7) are removed in a horizontal removal direction E, which is arranged perpendicularly to the feed direction V.

5. A laser-cutting machine for carrying out the method according to Patent Claim 1, with a laser-cutting head (18), which can be moved in a cutting zone (2) over the cutting table (5) in a horizontal plane, a sheet feed device (22) for feeding the sheet metal blank (1) to be machined in a feed direction V from a work table (16) into the cutting zone (2) of the laser-cutting machine and for positioning the sheet metal blank (1) in the cutting zone (2) of the laser cutting machine, **characterised in that** the laser-cutting machine has the following components:
- a cutting table (5), which can be moved to height H,
- a removal fork (15) of an automatic removal device, which removal fork can be inserted into and withdrawn from the cutting table (5),
- a control device (17) for controlling the machining processes of the laser-cutting machine according to the steps defined in Claim 1, and the loading and removal processes as a function of machining processes carried out with the laser-cutting machine on the sheet metal blank (1) according to the steps defined in Claim 1.

6. The laser-cutting machine according to Patent Claim 5, **characterised in that** the vertically moveable cutting table (5) can be moved from a working height Ea to a first level E1 below the working height, or to a first level E1 and a second level E2 even further below the working table.

7. The laser-cutting machine according to Patent Claim 6, **characterised in that** produced parts (6) and waste material (7) lying on the cutting table (5) can be transferred to the working height Ea or to the height of the first level E1 by means of the automatic removal device and by means of the removal fork (15), which can be inserted into and withdrawn from the cutting table.

8. The laser-cutting machine according to Patent Claim 7, **characterised in that** the selection as to whether a transfer takes place at the working height Ea or at the height of the first level E1 is made automatically and as a function of the presence of an overlapping zone (10) between the machined and the non-machined part (8, 9) of the sheet metal blank (1).

9. The laser-cutting machine according to one of the Patent Claims 5 to 8, **characterised in that** the removal fork (15) can be inserted into and withdrawn from the cutting table (5) in a removal direction E, which is arranged perpendicularly to the feed direction V.

## Revendications

1. Procédé de découpage au laser de tôles brutes (1) avec une machine de découpage au laser, la machine de découpage au laser comportant une tête de découpage au laser (18) mobile dans un plan horizontal et les tôles brutes (1) étant poussées dans une direction d'avance V, pièce par pièce pour l'usinage dans une position définie dans une zone de découpage (2) de la machine de découpage au laser, **caractérisé en ce que** dans une première étape d'usinage
- la tôle brute (1) est usinée dans une zone usinable (4) correspondant dans l'extension à la zone de découpage (2), sur une partie de l'ensemble de la zone usinable par découpage au laser,
- des pièces (6) fabriquées par découpage au laser et une grille résiduelle sont séparées de la tôle brute (1) également par découpage au laser,
- les pièces (6) fabriquées par découpage au laser, ensemble avec la grille résiduelle (7) sont ensuite éloignées au moyen d'un dispositif de prélèvement automatique de la zone de découpage (2) de la machine de découpage au laser,
et dans une ou dans plusieurs étapes d'usinage consécutives, après le prélèvement des pièces (6) usinées avec la grille résiduelle (7) de la zone de découpage (2) de la machine de découpage au laser, le procédé étant répétitible de la même manière, jusqu'à ce que la tôle brute (1) soit entièrement façonnée, à chaque étape d'usinage qui se répète, les résultats de l'étape d'usinage précédente étant pris en considération, l'exploitation de matière de la partie (8) de tôle brute (1) usinée dans chaque étape d'usinage suivante s'effectuant de sorte que sur une arête antérieure (3) d'une partie résiduelle (9), non usinée de la tôle brute (1) il soit coupé une ligne de séparation T partiellement à angle droit de la direction d'avance V, ne comportant aucune partie saillant par dessus en direction d'avance V et entre la partie usinée (8) de la tôle brute (1) et la partie non usinée (9) de la tôle brute (1) restant une zone de chevauchement (10), la zone de chevauchement (10) pouvant d'étendre dans une direction parallèle et/ou transversale à la direction d'avance V.

2. Procédé selon la revendication 1, **caractérisé en ce que** la tôle brute (1) et la partie (8) de la tôle brute (1) usinée dans chaque étape d'usinage sont usinées de sorte que l'exploitation de matière de la tôle brute (1) s'effectue si possible de façon optimale.

3. Procédé selon l'une quelconque des revendications 1 ou 2, après la fabrication de pièce au moyen de découpage au laser et après la séparation de la partie (8) usinée de la tôle brute (1) de la partie (9) non usinée de la tôle brute (1)
- une table de découpage (5) sur laquelle reposent les pièces usinées (6) et la grille résiduelle (7) s'abaisse, pour séparer dans tous les cas, mais sûrement dans le cas de la présence d'une zone de chevauchement (10) la partie (8) usinée de la tôle brute (1) de la partie (9) non usinée de la tôle brute (1),
- une fourche de prélèvement (15) est introduite dans la table de découpage (5) et sous les pièces (6) reposant sur la table de découpage (5) et la grille résiduelle (7),
- la table de découpage (5) sur laquelle reposent les pièces usinées (6) et la grille résiduelle (7) s'abaisse, ce qui a pour effet de faire reposer les pièces usinées (6) et la grille résiduelle (7) sur la fourche de prélèvement (15) et
- la fourche de prélèvement (15) avec les pièces (6) usinées et la grille résiduelle (7) reposant à présent sur la fourche de prélèvement est déplacée au moyen du dispositif de prélèvement automatique dans la direction de prélèvement E hors de la zone de découpage (2) de la machine de découpage au laser.

4. Procédé selon l'une quelconque des revendications 1 à 3, **caractérisé en ce que** le prélèvement des pièces usinées (6) et de la grille résiduelle (7) s'effectue dans une direction de prélèvement horizontale E, qui est disposée à angle droit par rapport à la direction d'avance V.

5. Machine de découpage au laser pour la réalisation du procédé selon la revendication 1,
avec une tête de découpage au laser (18) mobile dans un plan horizontal au dessus de la table de découpage (5) dans une zone de découpage (2)
un dispositif d'avance de tôle (22) pour pousser vers l'avant un tôle brute (1) à usiner dans une direction d'avance V, d'une table porte pièce (16) dans la zone de découpage (2) de la machine de découpage au laser, ainsi que pour le positionnement de la tôle brute (1) dans la zone de découpage (2) de la machine de découpage au laser,
**caractérisée en ce que** la machine de découpage au laser comporte les composants suivants :
- une table de découpage (5) mobile en hauteur H,
- une fourche de déchargement (15) déplaçable à l'intérieur et à l'extérieur de la table de découpage (5) d'un dispositif de prélèvement,
- un dispositif de commande (17) pour la commande des processus d'usinage de la machine de découpage au laser, selon les étapes définies dans la revendication 1, ainsi que des processus de chargement et de prélèvement en fonction de processus d'usinage réalisés avec la machine de découpage au laser sur la tôle brute (1).

6. Machine de découpage au laser selon la revendication 5, **caractérisée en ce que** la table de découpage (5) mobile en hauteur est mobile à partir d'une hauteur de travail Ea dans un premier plan E1 sous-jacent ou dans un premier plan E1 et dans un deuxième plan E2 encore sous-jacent.

7. Machine de découpage au laser selon la revendication 6, **caractérisée en ce qu'**un transfert de pièces (6) usinées et de la grille résiduelle (7) reposant sur la table de découpage (5) au moyen du dispositif de prélèvement automatique et au moyen de la fourche de déchargement (15) déplaçable à l'intérieur et à l'extérieur de la table de découpage est réalisable à la hauteur de travail Ea ou à hauteur du premier plan E1.

8. Machine de découpage au laser selon la revendication 7, **caractérisée en ce que** le choix, si un transfert est réalisé à la hauteur de travail Ea ou à la hauteur du premier plan E1 s'effectue automatiquement et en fonction de la présence d'une zone de chevauchement (10) entre la partie usinée et la partie non usinée (8, 9) de la tôle brute (1).

9. Machine de découpage au laser selon l'une quelconque des revendications 5 à 8, **caractérisée en ce que** la fourche de déchargement (15) est susceptible de rentrer et de sortir dans la table de découpage dans une direction de prélèvement E disposée à angle droit par rapport à la direction d'avance V.
